# EUROPÄISCHE PATENTSCHRIFT

(11) **EP 1 384 308 B1**
(45) Veröffentlichungstag und Bekanntmachung des Hinweises auf die Patenterteilung: **21.02.2007**
(21) Anmeldenummer: 02740236.1
(22) Anmeldetag: 08.04.2002
(51) Int. Cl.: H02N 2/00

(54) **PIEZOELEKTRISCHER ANTRIEB UND DESSEN VERWENDUNG ALS SCHWERLASTANTRIEB**
PIEZOELECTRIC DRIVE AND THE USE OF THE SAME AS A DRIVE FOR HEAVY LOADS
ENTRAINEMENT PIEZOELECTRIQUE ET SON UTILISATION COMME ENTRAINEMENT POUR CHARGES LOURDES

(30) Priorität: 06.04.2001 DE 10117465
(43) Veröffentlichungstag der Anmeldung: 28.01.2004
(73) Patentinhaber: Richter, Hans, 86163 Augsburg (DE)
(72) Erfinder: Richter, Hans, 86163 Augsburg (DE)
(74) Vertreter: Gallo, Wolfgang
(86) Internationale Anmeldenummer: PCT/DE2002/001270
(87) Internationale Veröffentlichungsnummer: WO 2003/005553

(56) Entgegenhaltungen:
- EP-A- 0 592 030
- WO-A-00/17944
- DE-U- 9 419 802

## Beschreibung

Die Erfindung betrifft einen piezoelektrischen Antrieb, und zwar insbesondere einen solchen für verhältnismäßig hohe Antriebskräfte bzw. Antriebsleistungen.

Ein solcher piezoelektrischer Antrieb kann sowohl als Drehantrieb (bei welchem eine Relativdrehung zwischen Bezugsteil und Abtriebsteil erzeugt wird) als auch als Linearantrieb (bei welchem eine lineare oder quasilineare Verschiebebewegung zwischen Bezugsteil und Abtriebsteil erzeugt wird) ausgebildet sein.

Ein Hauptanwendungsgebiet der Erfindung ist der Einsatz eines piezoelektrischen Antriebs als Stellantrieb, wo hohe Stellkräfte zu erzeugen sind, beispielsweise zur Betätigung von Kraftfahrzeugbremsen.

Das Grundkonzept eines solchen piezoelektrischen Antriebs ist beispielsweise aus dem deutschen Gebrauchsmuster 94 19 802 bekannt.

Der Grundaufbau eines solchen piezoelektrischen Antriebs umfaßt eine Reihe von jeweils als Piezoelementenstapel ausgebildeten Piezopaketen, die zwischen Bezugsteil und Abtriebsteil angeordnet sind, und zwar so, daß die Stapelhöhe der Piezoelemente in jedem Piezopaket senkrecht zur Oberfläche des Abtriebsteils und zur Richtung der Relativbewegung zwischen Bezugsteil und Abtriebsteil verläuft. Diese Piezostapel dienen zum selektiven Erzeugen einer Klemmkraft zwischen Bezugsteil und Abtriebsteil und werden daher im folgenden als Klemmpiezos bezeichnet. Diese Klemmpiezos sind jeweils mit einem Ende (wobei der Begriff Ende sich jeweils auf die Piezoelementenstapelanordnung bezieht) am Bezugsteil festgelegt und stützen sich mit dem anderen Ende auf dem Abtriebsteil ab, ohne daran festgelegt zu sein. Die Orientierung der Reihe, in welcher diese Klemmpiezos nebeneinander angeordnet sind, verläuft quer zur Richtung der Relativbewegung zwischen Abtriebsteil und Bezugsteil.

Weitere, ebenfalls jeweils als Piezoelementenstapel ausgebildete Piezopakete, die wegen ihrer Funktion nachstehend als Schrittpiezos bezeichnet werden, sind mit ihrer Stapelhöhenrichtung etwa senkrecht zur Stapelhöhenrichtung der Klemmpiezos und in Richtung der Relativbewegung zwischen Bezugsteil und Abtriebsteil orientiert. Diese Schrittpiezos sind jeweils mit einem Ende wiederum am Bezugsteil festgelegt und mit dem anderen Ende mit dem sich auf dem Abtriebsteil abstützenden Ende jeweils eines Klemmpiezos (oder einer Untergruppe von Klemmpiezos) verbunden.

Es sind zwei Gruppen von Klemmpiezos und zwei Gruppen von Schrittpiezos vorhanden. Diese werden elektrisch so angesteuert, daß jeweils die eine Gruppe von Klemmpiezos aktiviert, d.h. im Sinne einer Expansion elektrisch beaufschlagt wird und diese Klemmpiezos sich klemmend an das Abtriebsteil anlegen, während die andere Gruppe von Klemmpiezos deaktiviert, also in Lösestellung, d.h. nicht mit dem Abtriebsteil klemmend, geschaltet ist. Dann wird die der klemmend geschalteten Klemmpiezogruppe zugeordnete Gruppe von Schrittpiezos aktiviert, so daß die betreffenden Schrittpiezos sich dehnen und dadurch die auf dem Abtriebsteil klemmenden Enden der Klemmpiezos um eine entsprechende Distanz in Bewegungsrichtung des Abtriebsteils auslenken. Dadurch bewegt sich das Abtriebsteil um eine entsprechende Distanz unter den in Lösestellung gestalteten Klemmpiezos der anderen Klemmpiezogruppe hinweg. Danach wird die Ansteuerung umgeschaltet, d.h. die zuvor klemmenden Klemmpiezos werden in Lösestellung geschaltet, ebenso die zugehörigen Schrittpiezos, so daß die zuvor klemmenden Klemmpiezos sich aus der Klemmstellung lösen und in ihre Ausgangslage zurückkehren, während gleichzeitig die andere Gruppe von Klemmpiezos, die vorher in der Lösestellung waren, durch Aktivierung in die klemmende Position geschaltet und danach auch deren Schrittpiezos aktiviert werden. Auf diese Weise erzeugen die beiden Gruppen von Klemmpiezos mit jeweils zugeordneten Schrittpiezos durch ihren alternierenden Einsatz eine fortlaufende Schrittfolge, wodurch das Abtriebsteil schrittweise bewegt wird. Da diese Ansteuerung der Piezos im Frequenzbereich von einigen Kilohertz, z.B. 25 kHz, erfolgt, erhält man eine'quasi-kontinuierliche Bewegung des Abtriebsteils relativ zum Bezugsteil.

Aus dem Dokument WO 00/17944 ist ein ähnlicher piezoelektrischer Antrieb bekannt, dessen Klemmpiezos über eine gemeinsame starre Brücke, die sich ihrerseits über eine Keilverspannung gegen das Gehäuse abstützt, gehäuseseitig abgestützt sind.

Die vorstehenden Ausführungen geben die Theorie des Funktionsmechanismus wieder. Das bis hierher beschriebene Bauprinzip eines piezoelektrischen Antriebs ist damit aber, wie sich gezeigt hat, noch keineswegs praktisch umsetzbar.

Die in Rede stehenden Bewegungen sind außerordentlich klein. Der verfügbare Dehnungsweg eines Piezopakets beträgt etwa 1 ‰ der Stapelhöhe. Bei einer Stapelhöhe der Klemmpiezos von ca. 10 mm ergibt sich damit eine Dehnungsauslenkung von etwa 10 µm. Andererseits liegen die Toleranzen der mechanischen Bauteile des Antriebs selbst bei hochpräziser Fertigung jedenfalls im Hunderstel-Millimeterbereich. Auch die Stapelhöhe der Piezos unterliegt Fertigungstoleranzen, so daß bei einer Reihe von nebeneinander angeordneten Piezos diese alle innerhalb dieser Toleranzen unterschiedlich hoch sind. Man muß sich darüber im klaren sein, daß der Dehnungshub der Klemmpiezos, wenn man hier einen Bereich von etwa 10 um annimmt, im Rauhtiefenbereich mechanisch bearbeiteter Oberflächen von Werkstücken liegt. Daraus folgt aber, daß das Ganze funktionshotwendig voraussetzt, daß die Klemmpiezos zwischen Bezugsteil und Abtriebsteil stets unter straffer Vorspannung gehalten werden, da sonst bei dem verfügbaren Dehnungshub die geforderte Klemmkraft und somit die notwendige Reibkraft zum Bewegen des Abtriebsteils nicht erreicht werden kann. Daß die Klemmpiezos nicht unmittelbar auf das Abtriebsteil wirken brauchen, sondern die Anlage beispielsweise über einen Anlageschuh erfolgen kann, versteht sich von selbst.

Aufgabe der Erfindung ist es, eine praxistaugliche Anordnung eines piezoelektrischen Antriebs der genannten Art zu schaffen.

Diese Aufgabe wird gemäß der Erfindung durch die im Anspruch 1 angegebene Anordnung gelöst.

Vorteilhafte Ausgestaltungen der Erfindung sind Gegenstand der Unteransprüche.

Von zentraler Bedeutung für die praktische Ausführbarkeit und Arbeitsfähigkeit eines solchen piezoelektrischen Antriebs ist also eine Auslegung der Anordnung dergestalt, daß die Klemmpiezos sich mit ihren einen Enden an einer allen Klemmpiezos der Klemmpiezoreihe gemeinsamen "halbsteifen" Brücke, mit ihren anderen Enden jedoch an einer "steifen" Brücke abstützen, wobei die "halbsteife" bzw. "steife" Brücke sowohl am Bezugsteil als auch am Abtriebsteil angeordnet sein kann.

Die Bedeutung dieses Sachverhalts und des damit erzielten Funktionsmechanismus der Erfindung wird zweckmäßigkeitshalber im folgenden anhand eines Ausführungsbeispiels unter Bezugnahme auf die anliegenden Zeichnungen näher beschreiben. In den Zeichnungen zeigt:
- Fig. 1: eine schematisierte Seitenansicht eines piezoelektrischen Antriebs nach der Erfindung,
- Fig. 2: eine schematisierte, entsprechend den Pfeil II in Fig. 1 gesehene Prinzipdarstellung eines solchen piezoelektrischen Antriebs,
- Fig. 3: eine stark überzeichnete Darstellung der Anordnung nach Fig. 2 im Ruhezustand des Antriebs,
- Fig. 4: eine stark überzeichnete Darstellung der Anordnung nach Fig. 2 bei Aktivierung der einen Klemmpiezogruppe, und
- Fig. 5: eine stark überzeichnete Darstellung der Anordnung nach Fig. 2 bei Aktivierung der anderen Klemmpiezogruppe.

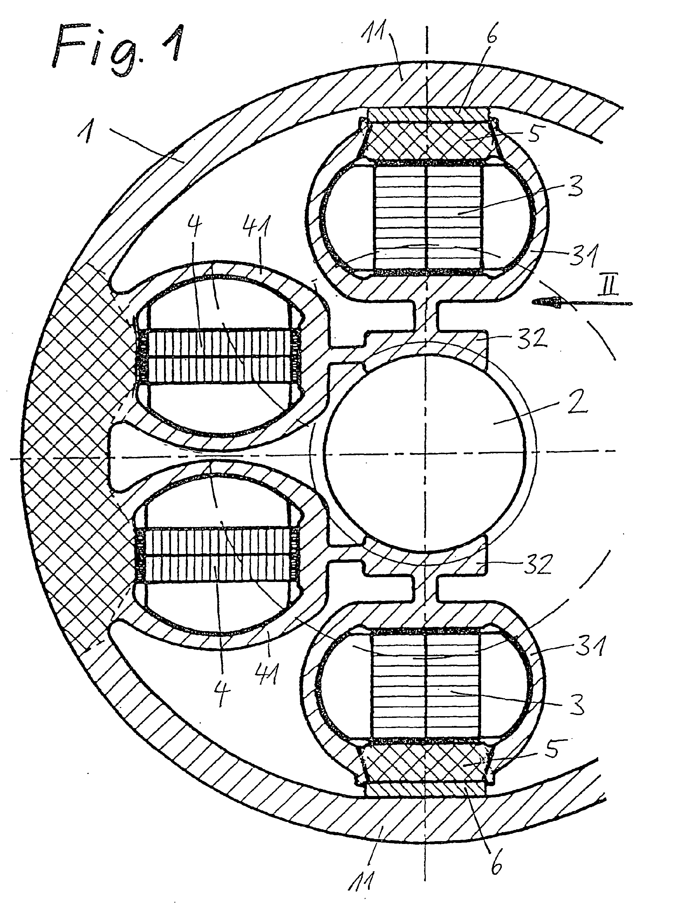

Fig. 1 zeigt den einleitend schon in seinen Grundzügen beschriebenen Aufbau eines piezoelektrischen Antriebs am Beispiel eines Dreh-Stellantriebs, der zur Betätigung einer Kraftfahrzeugbremse dienen und ein Drehmoment von beispielsweise 30 Nm entwickeln könnte. Diesbezügliche Einzelheiten sind aber nicht dargestellt und werden hier auch nicht beschrieben.

Gemäß Fig. 1 besteht der Antrieb aus einem Stator 1, welcher das Bezugsteil bildet, und einem Rotor 2, welcher das Abtriebsteil bildet, und dem dazwischen angeordneten Piezomechanismus. Der Piezomechanismus umfaßt eine Reihe von Klemmpiezos 3 und eine Reihe von Schrittpiezos 4. Die Klemmpiezos 3 sind jeweils zwischen einem dem betreffenden Klemmpiezo individuell zugeordneten Spannbügel 31 mit angeformtem Schuh 32 und einer allen Klemmpiezos gemeinsamen Brückenplatte 5 eingespannt. Die Brückenplatte 5 ist ihrerseits unter straffer, vorzugsweise flächiger Vorspannung durch ein schematisch dargestelltes Druckfederelement 6 an einem Gegenelement 11 des Stators 1 abgestützt, und der Schuh 32 jedes Klemmpiezos 3 stützt sich auf dem Rotor 2 ab, so daß die ganze, aus Brückenplatte 5, Klemmpiezos 3 und den zugehörigen Spannbügeln 31 mit Schuhen 32 gebildete Anordnung stramm zwischen dem Gegenelement 11 des Stators 1 und dem Rotor 2 eingespannt ist.

Die Schrittpiezos 4 sind jeweils in einem dem betreffenden Schrittpiezo individuell zugeordneten Spannkäfig 41 eingespannt, der an seinem vorderen Ende mit dem Schuh 32 eines zugeordneten Klemmpiezos 3 verbunden und mit seinem hinteren Ende einstückig oder formschlüssig mit einem allen Schrittpiezos gemeinsamen Trägerelement 12 des Stators 1 verbunden ist. Die in Fig. 1 dargestellte Anordnung ist, wie man sieht, eine symmetrisch angeordnete Doppelanordnung mit zwei symmetrisch angeordneten Piezomechanismen, von denen der eine in der oberen Zeichnungshälfte und der andere in der unteren Zeichnungshälfte angeordnet ist. Dadurch befindet sich der Rotor 2 zwischen zwei diametral gegenüberliegend angeordneten Reihen von Klemmpiezos 3 mit jeweils zugeordneten Schrittpiezos 4, so daß die von den beiden Piezomechanismen ausgeübten Klemmkräfte zwischen Stator 1 und Rotor 2 syemmetrisch wirkenden und dadurch die Lagerung des Rotors 2 keinen einseitigen Beanspruchungen ausgesetzt ist. -

In Fig. 1 ist auch sichtbar, daß zweckmäßigerweise die Klemmpiezos 3 mit kürzerer Stapelhöhe und größerer Breite und somit kräftiger als die Schrittpiezos 4 mit größerer Stapelhöhe und kleinerer Breite gemacht werden können, damit hohe Klemmkräfte in Kombination mit relativ großen Schrittweiten erzeugbar sind.

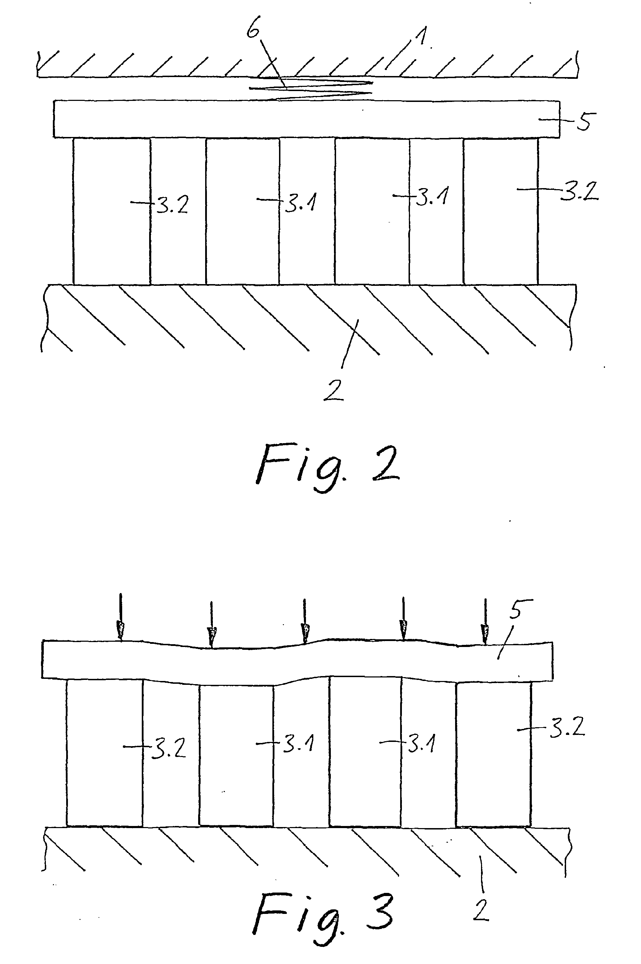

Fig. 2 zeigt nun eine Prinzipdarstellung der Klemmpiezoanordnung, in Richtung des Pfeils II in Fig. 1 gesehen. Dabei sind dargestellt eine Reihe von vier Klemmpiezos (3.1 bzw. 3.2), die Brückenplatte 5, das Statorelement 11', die zwischen dem Statorelement 11 und der Brückenplatte 5 wirkende Druckfeder 6 (hier stark vereinfacht dargestellt), und der Rotor 2. Die Klemmpiezoreihe umfaßt mindestens drei Klemmpiezos, um eine symmetrische Klemmkraft zu erzeugen. Wären drei Klemmpiezos vorhanden, sollte der mittlere Klemmpiezo in der Reihe doppelt so breit bzw. doppelt so stark wie die beiden äußeren Klemmpiezos sein, damit auch die Kräfte jeweils gleich sind, wenn alternierend die äußeren Klemmpiezos oder der innere Klemmpiezo aktiviert werden bzw. wird und die Klemmkraft erzeugt wird. Bei dem in Fig. 2 schematisch dargestellten Prinzip ist der mittlere Klemmpiezo symmetrisch aufgeteilt in zwei Einzelpiezos, so daß insgesamt vier Klemmpiezos vorhanden sind, nämlich eine Gruppe von zwei inneren Klemmpiezos 3.1 und eine Gruppe von zwei äußeren Klemmpiezos 3.2. Die in Fig. 1 dargestellten Spannbügel 31 und Schuhe 32 sind in der Prinzipdarstellung nach Fig. 2 nicht berücksichtigt bzw. als Bestandteil des jeweiligen Klemmpiezos betrachtet.

Fig. 3 zeigt nun die prinzipielle Anordnung nach Fig. 2 in stark überzeichneter Darstellung im Ruhezustand des Antriebs. Die fehlende Abstützung der Brückenplatte 5 ist in dieser Darstellung durch auf diese wirkende Kraftpfeile symbolisiert. Die vier Klemmpiezos sind unterschiedlich hoch dargestellt, was ihre Fertigungstoleranzen verdeutlichen soll. Die Brückenplatte 5, die über eine entsprechende Eigenelastizität verfügt, paßt sich unter dem auf sie wirkenden Vorspannungsdruck der dadurch entstehenden, freilich stark überzeichneten welligen Kontur der Klemmpiezoreihe an. Fig. 3 zeigt die Situation im Ruhezustand, d.h. alle Klemmpiezos sind deaktiviert, also nicht gedehnt.

Die Brückenplatte 5 ist das eingangs als "halbsteife" Brücke bezeichnete Bauteil, wobei der Begriff "halbsteif" ausdrückt, daß diese Brückenplatte 5 die Fähigkeit hat, sich der "welligen" toleranzbedingten Differenzkontur der diversen Klemmpiezos anzupassen und an sämtlichen Klemmpiezos satt anzuliegen, also die in Fig. 3 stark überzeichnete wellige Konfiguration anzunehmen. Das Abtrittsteil 2, beim Ausführungsbeispiel nach Fig. 1 der Rotor, bildet hingegen das eingangs als "steife" Brücke bezeichnete Element, d.h. es ist in sich so steif, daß es eine solche Anpassung wie die "halbsteife" Brückenplatte 5 nicht vollzieht.

Wird der Antrieb eingeschaltet, erfolgt zunächst eine Aktivierung aller Klemmpiezos, die folglich alle sich dehnen, so daß die Brückenplatte 5 dann sich um eine entsprechende Distanz von beispielsweise einem Zehntel Millimeter von dem Abtriebsteil 2 wegbewegt, die in Fig. 3 dargestellte Welligkeit aber im wesentlichen beibehalten bleibt. Danach erfolgt die alternierende Aktivierung jeweils einer Klemmpiezogruppe, wobei die Aktivierung der einen und der anderen Klemmpiezogruppe sich jeweils geringfügig überlappt, so daß im Umschaltmoment immer alle vier Klemmpiezos aktiviert sind.

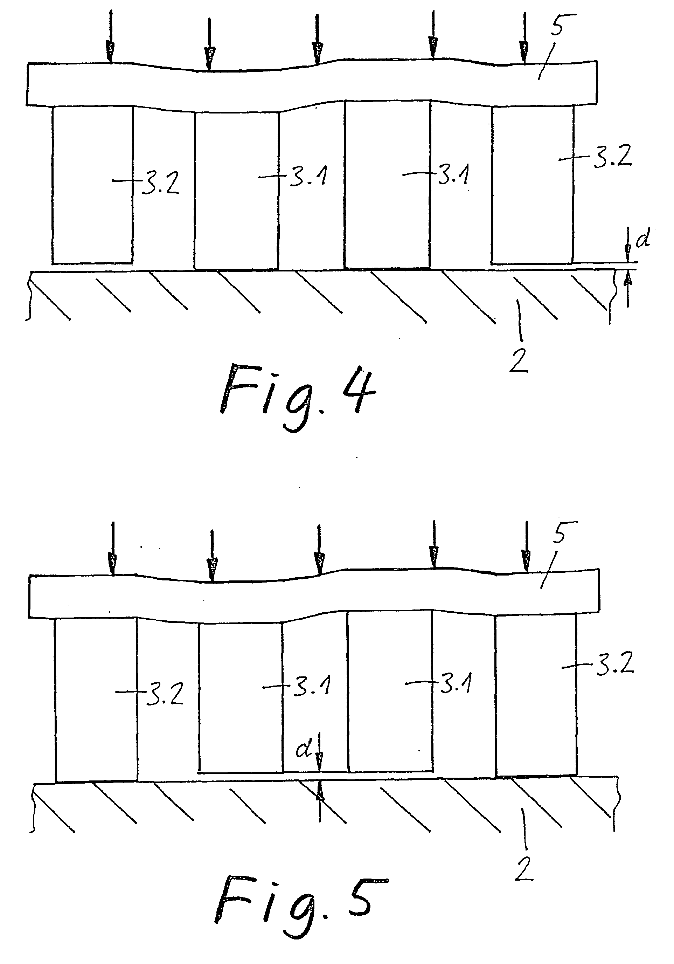

Fig. 4 zeigt nun analog Fig. 3 die Situation, wenn die eine Klemmpiezogruppe mit den Klemmpiezos 3.1 aktiviert und die beiden äußeren Klemmpiezos 3.2 der äußeren Klemmpiezogruppe deaktiviert sind.

Bei der in Fig. 4 dargestellten Situation tragen also nur die beiden inneren Klemmpiezos 3.1, die aktiviert und gedehnt sind, während die deaktivierten und damit nicht gedehnten äußeren Klemmpiezos 3.2 gelöst sind und keine Klemmkraft auf das Abtriebsteil 2 ausüben. Dies ist in Fig. 4 durch einen sichtbaren Spalt dargestellt, dessen Größe dort als Distanz d dargestellt ist. Tatsächlich ist in der Praxis dieser Spalt d so klein, daß die "halbsteife" Brückenplatte 5 im statischen Zustand durch entsprechendes Ausbiegen den Spalt alsbald wieder schließen würde.

Fig. 5 zeigt dann die Situation bei Aktivierung der beiden äußeren Klemmpiezos 3.2 und die Aktivierung der inneren Klemmpiezos 3.1, in welcher nur die äußeren Klemmpiezos 3.2 gedehnt sind und tragen, während die inneren Klemmpiezos 3.1 nicht gedehnt sind und wiederum um die Distanz d vom Abtriebsteil 2 abgehoben sind.

Da der Piezomechanismus in Kilohertzfrequenzbereich betrieben wird, beispielsweise mit 25 kHz dauert der Zustand nach Fig. 4 bzw. nach Fig. 5 jeweils nur über einen Zeitraum von knapp 20 µs an (entsprechend knapp einer Halbwelle der Ansteuerungsfrequenz, denn, wie gesagt, gibt es im Umsteuerzeitpunkt eine geringfügigere Überlappung). Damit ist ein entsprechendes Zeitfenster definiert, in welchem die deaktivierten Klemmpiezos durch Deaktivierung der zugehörigen Schrittpiezos um die Schrittdistanz zurückgeführt und gleichzeitig die jeweils tragenden Klemmpiezos mittels der zugehörigen Schrittpiezos in Vorschubrichtung bewegt und dadurch das Abtriebsteil 2 um eine Schrittdistanz weiterbewegt werden kann. Nur während dieses Zeitfensters, bei dem die eine Klemmpiezogruppe nicht trägt, kann der Vorschub durch die jeweils andere Klemmpiezogruppe durch Aktivierung der zugehörigen Schrittpiezos bewirkt werden.

Für die Funktion des elektropiezitschen Antriebs bei der Übertragung großer Drehmomente und folglich hoher Klemmkräfte zwischen den Klemmpiezos und dem Abtriebsteil 2 ist es daher funktionsnotwendig, daß während dieses Zeitfensters keine Klemmung zwischen der jeweils deaktivierten Klemmpiezogruppe und dem Abtriebsteil 2 besteht (wobei aber zu beachten ist, daß in der praktischen Umsetzung die "halbsteife" Brückenplatte 5 auch durch das Abtriebsteil gebildet sein kann und die Abstützung der anderen Piezoenden auf den Bezugsteil erfolgen kann, so daß die kinematische Umkehrung der in den Fig. 4 und 5 beschriebenen Situation gleichermaßen realisierbar ist). Das bedeutet aber, daß während dieses Zeitfensters die "halbsteife" Brückenplatte 5 im Bereich der jeweils deaktivierten, also nicht klemmenden Klemmpiezos nicht soweit einbrechen darf, daß ein Klemmschluß zwischen diesen deaktivierten Klemmpiezos und dem Abtriebsteil 2 eintritt. Vielmehr muß die Steifigkeit der Brückenplatte 5 so groß sein, daß sie während des Zeitfensters die Distanz d möglicherweise teilweise verringert, aber nicht vollständig zum Verschwinden bringt.

Praktische Versuche haben bei einer Betriebsfrequenz von 25 kHz und entsprechender Auslegung der Brückenplatte 5 ergeben, daß während des Zeitfensters ein Einbrechen der Brückenplatte 5 im Bereich der inneren Klemmpiezos etwa 0,8 µm und im Bereich der äußeren Klemmpiezos etwa 1,2 µm erfolgt.

Eine zu geringe Steifigkeit der Brückenplatte 5 würde zu einem verstärkten Einbrechen führen, eine zu große Steifigkeit würde, wie oben dargestellt, das gleichmäßige Tragen aller aktivierten Klemmpiezos unterbinden.

Im höchsten Maße kritisch für die Funktion des piezoelektrischen Antriebs ist also die Bemessung und Ausbildung der Brückenplatte 5. Diese soll ihre im Ruhezustand eingenommene Konfiguration (Fig. 3) auch im Betrieb im wesentlichen beibehalten (siehe Fig. 4 und 5), denn die Brückenplatte 5 soll selbst nicht in nennenswerte Biegeschwingungen geraten.

Für die nach den oben beschriebenen Kriterien notwendige Bemessung und Auslegung der Brückenplatte 5 sind also folgende Parameter zu berücksichtigen:
- der Elastizitätsmodul des Materials, aus dem die Brückenplatte 5 hergestellt ist,
- die Betriebsfrequenz des Piezoantriebs, denn bei der Betriebsfrequenz soll die Brückenplatte 5 in sich im wesentlichen steif bleiben, im statischen Zustand aber die zur Anpassung notwendige Flexibilität haben,
- die Querabstände der Klemmpiezos.

Bei einer Stapelhöhe der Klemmpiezos von ca. 10 mm ergibt sich also ein Dehnungshub der Klemmpiezos von etwa 10 µm. Bei einer statischen Auslenkbarkeit der Brückenplatte 5 zwischen den einzelnen Klemmpiezos um etwa 14 ... 15 µm und einem dynamischem Verhalten mit einem Einbruch um ca. 1 µm während des genannten Zeitfensters über den nicht aktivierten Klemmpiezos erhält man also eine einwandfreie Motorfunktion.

Die Erfindung eignet sich auch als Schwerlastantrieb, also beispielsweise für den Radantrieb von Panzern oder ähnlichen Fahrzeugen, wo hohe Drehmomente erzeugt werden müssen.

## Patentansprüche

1. Piezoelektrischer Antrieb, bestehend aus einer Mehrzahl von nebeneinander angeordneten Klemmpiezopaketen (3) jeweils in Gestalt von Piezoelementenstapeln, die in Richtung ihrer Stapelhöhe zwischen einem Bezugsteil (1) und einem Abtriebsteil (2) unter Druckvorspannung angeordnet sind und denen jeweils ein Schrittpiezopaket (4) in Gestalt einer Piezoelementenstapels zugeordnet ist, dessen Stapelrichtung etwa senkrecht zur Stapelrichtung der Klemmpiezopakete (3) und in Richtung der Relativbewegung zwischen Bezugsteil (1) und Abtriebsteil (2) angeordnet ist, und wobei alle Klemmpiezostapel (3) mit ihrem einen Ende an einem der Elemente Bezugsteil und Abtriebsteil festgelegt sind und sich mit ihrem freien anderen Ende auf dem jeweils anderen der Elemente Bezugsteil und Abtriebsteil abstützen und wobei die Schrittpiezostapel (4) jeweils mit einem Ende am gleichen der Elemente Bezugsteil und Abtriebsteil festgelegt sind, an welchem auch die einen Enden der Klemmpiezostapel (3) festgelegt sind, und mit ihrem anderen Ende mit dem freien Ende jeweils eines Klemmpiezostapels verbunden sind,
**dadurch gekennzeichnet, daß** die Klemmpiezostapel mit jeweils einem Ende an einem gemeinsamen "steifen" Bauteil abgestützt sind und mit ihrem anderen Ende an einer unter Druckvorspannung von dem betreffenden Element Bezugsteil oder Abtriebsteil gegen die betreffenden Klemmpiezostapelenden gedrückten Brückenplatte (5) abgestützt sind, die "halbsteif" ausgebildet ist,
wobei die "halbsteife" Auslegung der Brückenplatte (5) bedeutet, daß diese sich mindestens im Längentoleranz- und Dehnungshubbereich der Klemmpiezostapel im statischen Zustand Stapelhöhendifferenzen der einzelnen Klemmpiezostapel biegeelastisch anpaßt, im dynamischen Zustand bei der Betriebsfrequenz sich jedoch im wesentlichen starr verhält und während des Zeitfensters, in dem jeweils eine Gruppe von Klemmpiezostapeln elektrisch deaktiviert und ungedehnt und die andere Gruppe von Klemmpiezostapeln elektrisch aktiviert und gedehnt ist, unter dem Vorspanndruck nur um höchstens einen Bruchteil der Piezohubdistanz nachgibt.

2. Antrieb nach Anspruch 1, wobei die "halbsteife" Brückenplatte (5) dem Bezugsteil (1) zugeordnet und an diesem unter Druckvorspannung elastisch abgespannt ist und die freien Enden der Klemmpiezostapel (3) sich auf den als "steifes" Bauteil ausgebildeten Abtriebsteil (2) abstützen.

3. Verwendung eines piezoelektrischen Antriebs nach einem der Ansprüche 1 oder 2 als Schwerlastantrieb, beispielsweise als Einzelradantrieb von Panzerfahrzeugen.

## Claims

1. A piezoelectric drive, consisting of a plurality of packets of clamping piezos (3) arranged side-by-side, each packet in the form of stacks of piezo elements arranged between a reference part (1) and a driven part (2) under compressive pre-stress conditions along their direction of stack height, each packet of clamping piezos being associated with a stepping piezo packet (4) in the form of a stack of piezo elements whose stacking direction is arranged about normal to the stacking direction of the packets of clamping piezos (3) and in the direction of the relative movement between the reference part (1) and the driven part (2), all of the stacks of clamping piezos (3) being fixed with their one end to one of the elements reference part and driven part, and finding support at their other free end by the respective other one of the elements reference part and driven part, and wherein each of the stacks of stepping piezos (4) is fixed with one end to the same one of the elements reference part and driven part to which the one ends of the stacks of clamping piezos (3) are also fixed, and at its other end is connected to the free end of a respective one of the stacks of the clamping piezos,
**characterized in that** each stack of clamping piezos finds support at one end by a common "rigid" component and at the other end by a bridging plate (5) that is pressed against the respective end of the stack of clamping piezos in a compressive pre-stress condition by the respective element reference part or driven part, said bridging plate being designed as "semi-rigid",
wherein the "semi-rigid" design of the bridging plate (5) means that it adjusts in a bending elastic manner to stack height differences of the individual stacks of clamping piezos at least in the length tolerance and expansion stroke range of the stack of clamping piezos in the static state, whereas in the dynamic state at operating frequency it behaves essentially rigidly and only allows at most a fraction of the piezo stroke length under pre-stress pressure during the time frame in which a respective one group of stacks of clamping piezos is electrically deactivated and un-expanded and the other group of stacks of clamping piezos is electrically activated and expanded.

2. The drive according to claim 1, wherein the "semi-rigid" bridging plate (5) is associated with the reference part (1) and engages it elastically under compressive pre-stress conditions, and wherein the free ends of the stacks of clamping piezos (3) find support by the driven part (2) which is designed as a "rigid" component.

3. Use of a piezoelectric drive according to one of claims 1 or 2 as a heavy load drive, for example as a single-wheel drive of tanks.

## Revendications

1. Entraînement piézo-électrique, composé d'une pluralité de paquets piézo de serrage (3) disposés les uns à côtés des autres et se présentant sous la forme d'empilements d'éléments piézo qui, dans le sens de leur hauteur d'empilement, sont disposés sous une précontrainte de pression entre une pièce de référence (1) et une pièce de sortie (2) et auxquels est respectivement associé un paquet piézo de déplacement (4) se présentant sous la forme d'un empilement d'éléments piézo dont la direction d'empilement est disposée approximativement perpendiculairement à la direction d'empilement des paquets piézo de serrage (3) et dans la direction du mouvement relatif entre la pièce de référence (1) et la pièce de sortie (2), et tous les empilements piézo de serrage (3) étant immobilisés, par l'une de leurs extrémités, au niveau de l'un des éléments pièce de référence et pièce de sortie et s'appuyant, par leur autre extrémité libre, respectivement sur l'autre des éléments pièce de référence et pièce de sortie, et les empilements piézo de déplacement (4) étant immobilisés respectivement par l'une de leurs extrémités au niveau du même élément pièce de référence et pièce de sortie que celui au niveau duquel sont immobilisés les empilements piézo de serrage (3) par l'une de leurs extrémités, et reliés par leur autre extrémité respectivement avec l'extrémité libre d'un empilement piézo de serrage,
**caractérisé en ce que** les empilements piézo de serrage s'appuient, respectivement par l'une de leurs extrémités, sur un composant commun "rigide", et, par leur autre extrémité, sur une plaque de pontage (5) « semi-rigide », serrée sous précontrainte de pression contre les extrémités d'empilement piézo de serrage correspondantes par l'élément pièce de référence ou pièce de sortie correspondant, la conception « semi-rigide » de la plaque de pontage (5) signifiant qu'à l'état statique, celle-ci s'adapte élastiquement en flexion au moins en ce qui concerne la plage de tolérance en longueur et la course d'extension des empilements piézo de serrage aux différences de hauteur d'empilement des différents empilements piézo de serrage mais qu'à l'état dynamique, celle-ci reste sensiblement rigide à la fréquence de fonctionnement et ne cède au maximum que d'une fraction de la distance de course piézo sous la précontrainte de pression pendant la fenêtre de temps, dans laquelle un groupe d'empilements piézo de serrage est respectivement désactivé électriquement et non étendu et l'autre groupe d'empilements piézo de serrage est activé électriquement et étendu.

2. Entraînement selon la revendication 1, la plaque de pontage (5) « semi-rigide » étant associée à la pièce de référence (1) et haubanée élastiquement à celle-ci sous précontrainte de pression et les extrémités libres des empilements piézo de serrage (3) s'appuyant sur la pièce de sortie (2) réalisée sous la forme d'un composant « rigide ».

3. Utilisation d'un entraînement piézo-électrique selon l'une des revendications 1 ou 2 comme entraînement pour charges lourdes, par exemple comme entraînement à roues indépendantes de véhicules blindés.
